# EUROPEAN PATENT APPLICATION

(11) **EP 4 462 921 A1**
(43) Date of publication of application: **13.11.2024**
(21) Application number: 24175069.4
(22) Date of filing: 09.05.2024
(51) Int. Cl.: H04W 72/12, H04J 11/00, H04W 72/541, H04W 88/06, H04W 72/21, H04W 72/23

(54) **DETERMINING INTERFERENCE SOURCE INFORMATION**

(30) Priority: 12.05.2023 GB 202307057
(71) Applicant: Nokia Technologies Oy, 02610 Espoo (FI)
(72) Inventor: OLESEN, Poul, 9530 Støvring (DK); RYSGAARD, Bent Henneberg, 9220 Aalborg (DK); SEBIRE, Benoist Pierre, Tokyo, 106-6141 (JP); KOSKELA, Jarkko Tuomo, 90510 Oulu (FI)
(74) Representative: Script Intellectual Property LLP

(57) **Abstract**

A user equipment comprising means for:
determining that a level of interference of a received signal at the user equipment is above a threshold;
determining a transmission state of at least one sub-system of the user equipment; and
determining based, at least in part, on the determining that a level of interference of a received signal is above a threshold and the determined transmission state of at least one sub-system whether at least a portion of the interference is caused by a transmitter of the user equipment.

## Description

### TECHNOLOGICAL FIELD

Examples of the disclosure relate to determining interference source information. Some relate to determining source information of internal or externa, interfering signals.

### BACKGROUND

A wireless network comprises a plurality of network nodes including terminal nodes and access nodes. Communication between the terminal nodes and access nodes is wireless.

A network node, such as a terminal node, can experience interference caused by signals received by the terminal node.

In some circumstances it may be desirable to improve or enhance determining information concerning interference and/or mitigating interference.

### BRIEF SUMMARY

According to various, but not necessarily all, embodiments there is provided a user equipment comprising means for:
determining that a level of interference of a received signal at the user equipment is above a threshold;
determining a transmission state of at least one sub-system of the user equipment; and
determining based, at least in part, on the determining that a level of interference of a received signal is above a threshold and the determined
transmission state of at least one sub-system whether at least a portion of the interference is caused by a transmitter of the user equipment.

In some examples, determining the transmission state of at least one sub-system of the user equipment comprises receiving an indication that a transmitter of the at least one sub-system of the user equipment is active.

In some examples, the means are configured to determine that the source of at least part of the interference is internal to the user equipment or that the source of the interference is external to the user equipment, wherein the determining is based, at least in part, on the determining that a level of interference of a received signal is above a threshold and the determined transmission state of at least one sub-system.

In some examples, determining whether at least a portion of the interference is caused by a transmitter of the user equipment comprises determining whether at least one transmitter of at least one sub-system of the user equipment is on while the interference is received.

In some examples, determining that a level of interference of a received signal at a user equipment is above a threshold comprises comparing a signal indicative of the power of the received signal and a reference signal level.

In some examples, the means are configured to:
determine, for a plurality of received signals received over a period of time, whether at least a portion of each of the plurality of received signals is caused by a transmitter of the user equipment; and
determine timing information for received signals from at least one source that is internal to the user equipment and/or at least one source that is external to the user equipment.

In some examples, the means are configured to:
transmit the determined timing information and associated determined information regarding the source of the received signals towards a network node; and
receive, from the network node, configuration information for scheduling of transmission and/or reception of information by at least one sub-system of the user equipment to reduce interference by received signals.

In some examples, the means comprises
at least one processor; and
at least one memory including computer program code,
the at least one memory storing instructions that, when executed by the at least one processor, cause performance of the apparatus.

According to various, but not necessarily all, embodiments there is provided a method comprising:
determining that a level of interference of a received signal at a user equipment is above a threshold;
determining a transmission state of at least one sub-system of the user equipment; and
determining based, at least in part, on the determining that a level of interference of a received signal is above a threshold and the determined transmission state of at least one sub-system whether at least a portion of the interference is caused by a transmitter of the user equipment.

In some examples, determining the transmission state of at least one sub-system of the user equipment comprises receiving an indication that a transmitter of the at least one sub-system of the user equipment is active.

In some examples, the method comprises determining that the source of at least part of the interference is internal to the user equipment or that the source of the interference is external to the user equipment, wherein the determining is based, at least in part, on the determining that a level of interference of a received signal is above a threshold and the determined transmission state of at least one sub-system.

In some examples, the method comprises:
determining, for a plurality of received signals received over a period of time, whether at least a portion of each of the plurality of received signals is caused by a transmitter of the user equipment; and
determining timing information for received signals from at least one source that is internal to the user equipment and/or at least one source that is external to the user equipment.

In some examples, the method comprises:
transmitting the determined timing information and associated determined information regarding the source of the received signals towards a network node; and
receiving, from the network node, configuration information for scheduling of transmission and/or reception of information by at least one sub-system of the user equipment to reduce interference by received signals.

According to various, but not necessarily all, embodiments there is provided computer program comprising instructions which, when executed by an apparatus, cause the apparatus at least to perform:
determining that a level of interference of a received signal at a user equipment is above a threshold;
determining a transmission state of at least one sub-system of the user equipment; and
determining based, at least in part, on the determining that a level of interference of a received signal is above a threshold and the determined transmission state of at least one sub-system whether at least a portion of the interference is caused by a transmitter of the user equipment.

In some examples, determining the transmission state of at least one sub-system of the user equipment comprises receiving an indication that a transmitter of the at least one sub-system of the user equipment is active.

In some examples, the computer program comprises instructions which, when executed by an apparatus, cause the apparatus to perform at least determining that the source of at least part of the interference is internal to the user equipment or that the source of the interference is external to the user equipment, wherein the determining is based, at least in part, on the determining that a level of interference of a received signal is above a threshold and the determined transmission state of at least one sub-system.

In some examples, the computer program comprises instructions which, when executed by an apparatus, cause the apparatus to perform at least:
determining, for a plurality of received signals received over a period of time, whether at least a portion of each of the plurality of received signals is caused by a transmitter of the user equipment; and
determining timing information for received signals from at least one source that is internal to the user equipment and/or at least one source that is external to the user equipment.

In some examples, the computer program comprises instructions which, when executed by an apparatus, cause the apparatus to perform at least:
transmitting the determined timing information and associated determined information regarding the source of the received signals towards a network node; and
receiving, from the network node, configuration information for scheduling of transmission and/or reception of information by at least one sub-system of the user equipment to reduce interference by received signals.

According to various, but not necessarily all, embodiments there is provided an apparatus comprising means for:
transmitting assistance information by a user equipment towards a network node, the assistance information comprising timing information of interfering received signals at the user equipment and associated source information, wherein the source information indicates whether the source of at least a portion of the interference is caused by a transmitter of the user equipment or if the interference is caused by a source external to the user equipment; and
receiving, from the network node, configuration information for scheduling of transmission and/or reception of information by at least one sub-system of the user equipment to reduce interference by received signals.

In some examples, the means are configured to:
transmit, by the user equipment, towards the network node capability information indicating the capability of the user equipment to determine and report source information of interfering received signals.

In some examples, the means are configured to:
receive, from the network node, configuration information to configure the user equipment to determine and report source information of interfering received signals.

According to various, but not necessarily all, embodiments there is provided a method comprising:
transmitting assistance information by a user equipment towards a network node, the assistance information comprising timing information of interfering received signals at the user equipment and associated source information, wherein the source information indicates whether the source of at least a portion of the interference is caused by a transmitter of the user equipment or if the interference is caused by a source external to the user equipment; and
receiving, from the network node, configuration information for scheduling of transmission and/or reception of information by at least one sub-system of the user equipment to reduce interference by received signals.

According to various, but not necessarily all, embodiments there is provided an apparatus comprising means for:
receiving assistance information from a user equipment, the assistance information comprising timing information of interfering received signals at the user equipment and associated source information, wherein the source information indicates whether the source of at least a portion of the interference is caused by a transmitter of the user equipment or if the interference is caused by a source external to the user equipment;
determining based, at least in part, on the received assistance information scheduling information for transmission and/or reception of information by at least one sub-system of the user equipment to reduce interference by received signals; and
transmitting, towards the user equipment, configuration information to configure the user equipment for transmission and/or reception according to the scheduling information.

In some examples, the means are configured to:
receive, from the user equipment, capability information indicating the capability of the user equipment to determine and report source information of interfering received signals.

In some examples, the means are configured to:
determine based, at least in part, on the received capability information, configuration information to configure the user equipment to determine and report source information of interfering received signals; and
transmitting the configuration information towards the user equipment.

According to various, but not necessarily all, embodiments there is provided a method comprising:
receiving assistance information from a user equipment, the assistance information comprising timing information of interfering received signals at the user equipment and associated source information, wherein the source information indicates whether the source of at least a portion of the interference is caused by a transmitter of the user equipment or if the interference is caused by a source external to the user equipment;
determining based, at least in part, on the received assistance information scheduling information for transmission and/or reception of information by at least one sub-system of the user equipment to reduce interference by received signals; and
transmitting, towards the user equipment, configuration information to configure the user equipment for transmission and/or reception according to the scheduling information.

According to various, but not necessarily all, examples there is provided examples as claimed in the appended claims.

According to various, but not necessarily all, embodiments there is provided an apparatus comprising
at least one processor; and
at least one memory including computer program code;
the at least one memory storing instructions that, when executed by the at least one processor, cause the apparatus at least to perform at least a part of one or more methods disclosed herein.

According to various, but not necessarily all, embodiments there is provided an apparatus comprising means for performing at least part of one or more methods disclosed herein.

The description of any function and/or action should additionally be considered to also disclose any means suitable for performing that function and/or action.

Functions and/or actions described herein can be performed in any suitable way using any suitable method.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIG. 1 shows an example of the subject matter described herein;
FIG. 2 shows another example of the subject matter described herein;
FIG. 3 shows another example of the subject matter described herein;
FIG. 4 shows another example of the subject matter described herein;
FIG. 5 shows another example of the subject matter described herein;
FIG. 6 shows another example of the subject matter described herein;
FIG. 7 shows another example of the subject matter described herein;
FIG. 8 shows another example of the subject matter described herein;
FIG. 9 shows another example of the subject matter described herein;
FIG. 10 shows another example of the subject matter described herein;
FIG. 11 shows another example of the subject matter described herein;
FIG. 12A shows another example of the subject matter described herein; and
FIG. 12B shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DETAILED DESCRIPTION

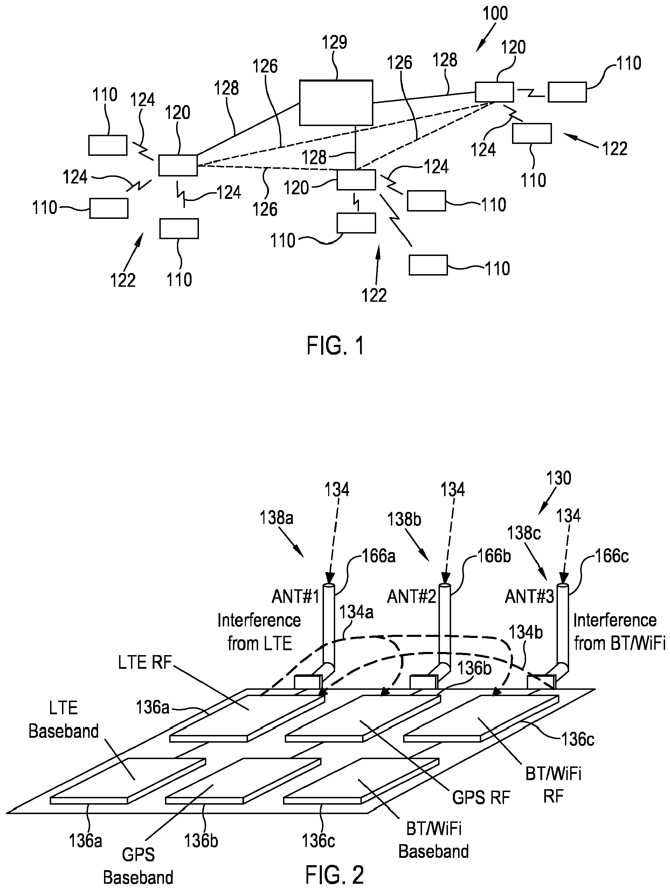

FIG 1 illustrates an example of a network 100 comprising a plurality of network nodes including terminal nodes 110, access nodes 120 and one or more core nodes 129. The terminal nodes 110 and access nodes 120 communicate with each other. The one or more core nodes 129 communicate with the access nodes 120.

The network 100 is in this example a radio telecommunications network, in which at least some of the terminal nodes 110 and access nodes 120 communicate with each other using transmission/reception of radio waves/signals.

The one or more core nodes 129 may, in some examples, communicate with each other. The one or more access nodes 120 may, in some examples, communicate with each other.

The network 100 may be a cellular network comprising a plurality of cells 122 each served by an access node 120. In this example, the interface between the terminal nodes 110 and an access node 120 defining a cell 122 is a wireless interface 124.

The access node 120 is a cellular radio transceiver. The terminal nodes 110 are cellular radio transceivers.

In the example illustrated the cellular network 100 is a third generation Partnership Project (3GPP) network in which the terminal nodes 110 are user equipment 130 (UE), see, for example, FIG 2, 3 and/or 4, and the access nodes 120 are base stations.

In examples the network 100 is an Evolved Universal Terrestrial Radio Access network (E-UTRAN). The E-UTRAN consists of E-UTRAN NodeBs (eNBs) 120, providing the E-UTRA user plane and control plane (RRC) protocol terminations towards the UE 110. The eNBs 120 are interconnected with each other by means of an X2 interface 126. The eNBs are also connected by means of the S1 interface 128 to the Mobility Management Entity (MME) 129.

In other examples the network 100 is a Next Generation (or New Radio, NR) Radio Access network (NG-RAN). The NG-RAN consists of gNodeBs (gNBs) 120, providing the user plane and control plane (RRC) protocol terminations towards the UE 110. The gNBs 120 are interconnected with each other by means of an Xn interface 126. The gNBs are also connected by means of the N2 interface 128 to the Access and Mobility management Function (AMF).

In examples, the network 100 can comprise a combination of E-UTRAN and NG-RAN.

A user equipment 130 (UE) can comprise a mobile equipment. Where reference is made to user equipment that reference includes and encompasses, wherever possible, a reference to mobile equipment.

A user equipment 130 can receive electromagnetic signals, such as signals transmitted by at least one device using wireless communications, that interfere with receiving signals at/by the UE 130 during wireless communication.

For example, signals transmitted in a frequency band that is adjacent to and/or overlaps with a frequency band being used for reception by a UE 130 can cause interference at the UE 130. Such signals can be considered received interfering signals.

A UE 130 can comprise multiple sub-systems 136 each configured to transmit and receive signals to communicate wirelessly. In such UEs 130 in-device coexistence interference (IDC) can exist when transmitting in one frequency band interferes with receiving in another, within the same UE 130. See, for example, FIG. 2.

FIG. 2 schematically illustrates in-device coexistence interference (IDC) in a UE 130.

In the example of FIG.2, the UE 130 comprises three subsystems 136a, 136b, and 136c configured for wireless communication using different radio access technologies (RATs).

In the illustrated example, the UE 130 comprises a first subsystem 136a configured for communication using a network such as the network 100 in the example of Fig. 1. In FIG. 2, the first sub-system 136a is configured for long term evolution (LTE) wireless communication. In some examples, the first sub-system can be configured for new radio (NR) communication. In examples, the first sub-system 136a can be considered a third-generation partnership project (3GPP) sub-system 136a.

A 3GPP sub-system can be considered a communication system that implements at least one 3GPP communication standards.

A sub-system 136 can be considered a system of an apparatus, such as a UE 130, configured for wireless communication using at least one radio access technology (RAT) such as LTE, NR, Bluetooth, Wi/Fi and so on.

A sub-system 136 can comprise any suitable component(s) to enable the sub-system to communicate using the RAT(s) of that sub-system. For example, a sub-system 136 can comprise radio frequency (RF) circuitry, baseband circuitry, at least one antenna, and/or at least one controller and so on.

In FIG. 2, the UE 130 also comprises a second sub-system 136b configured for global positioning satellite (GPS) communication and a third sub-system 136c configured for Bluetooth/Wi-Fi communication.

In the example of FIG. 2, the baseband circuitry and radio frequency (RF) circuitry for each of the sub-systems 136a, 136b, and 136c are shown, and each sub-system comprises an associated antenna 166a, 166b, 166c.

However, in examples a plurality of the sub-systems 136a, 136b, 136c can share at least one antenna 166.

Additionally, or alternatively, one or more of the components shown in the example of FIG. 2 can be integrated and/or shared.

As shown by the dashed arrows in the example of FIG. 2, transmissions from one or more of the other sub-systems 136 can cause interference with reception of signals at a sub-system 136.

For example, signals 134a transmitted by the first sub-system 136a can cause interference with reception by the second and/or third sub-systems 136b, 136c.

Similarly, signals 134b transmitted by the third sub-system 136c can cause interference with reception by the first sub-system 136a.

Accordingly, signals 134a transmitted by the first sub-system 136a can be considered received interfering signals 134a from the point of view of the second and third sub-systems 136b, 136c and signals 134b transmitted by the third sub-system 136c can be considered received interfering signals 134b by the first sub-system 136a. Such received interfering signals 134 can be considered to originate from a source internal to the UE 130.

Additionally, and/or alternatively, received interfering signals 134 can originate from a source external to the UE130, such as another UE 130. This is indicated in the example of FIG. 2 by the dashed arrows labelled 134.

In examples, received interfering signals 134 can be considered signals transmitted by a source different to the system that is receiving the signals and that cause reception interference for the receiving system. Received interfering signals 134 can be transmitted by a source external and/or internal to a UE 130.

From the point of view of a sub-system 136 of the UE 130, received interfering signals 134 can be considered signals received that are not scheduled for the sub-system 136.

In examples, received interfering signals 134 can be considered received signals 134, that are in a frequency band or bands that will cause reception interference for a sub-system of a UE 130.

At least a portion of a sub-system 136 of a UE 130 that is configured to transmit signals can be considered a transmitter 138. For example, the UE 130 of the example of FIG. 2 can be considered to comprise three transmitters 138a, 138b, 138c.

A sub-system 136 of a UE 130 might not know the exact timing and frequency of transmissions from other sub-systems 136 using different RATs. Furthermore, a sub-system 136 of a UE 136 may not have any information regarding timing and frequency of transmissions from external sources of interference.

This means that a sub-system 136 of a UE 130 can receive interfering signals 134 and not know if the source of the interference is internal and/or external to the UE 130 causing problems, for example, regarding mitigating interference. For example, not having information regarding the root cause of the interference can cause problems as mitigation techniques that can be applied are different depending on whether the origin of the interference, or aggressor, is external or internal to the UE 130.

Examples of the disclosure relate to apparatus, methods, and/or computer programs for and/or involved in determining source information for received interfering signals.

Additionally, or alternatively, examples of the disclosure relate to apparatus, methods, and/or computer programs for and/or involved in scheduling reception and/or transmission of signals by at least one sub-system of a UE 130 to avoid internal and/or external received interfering signals.

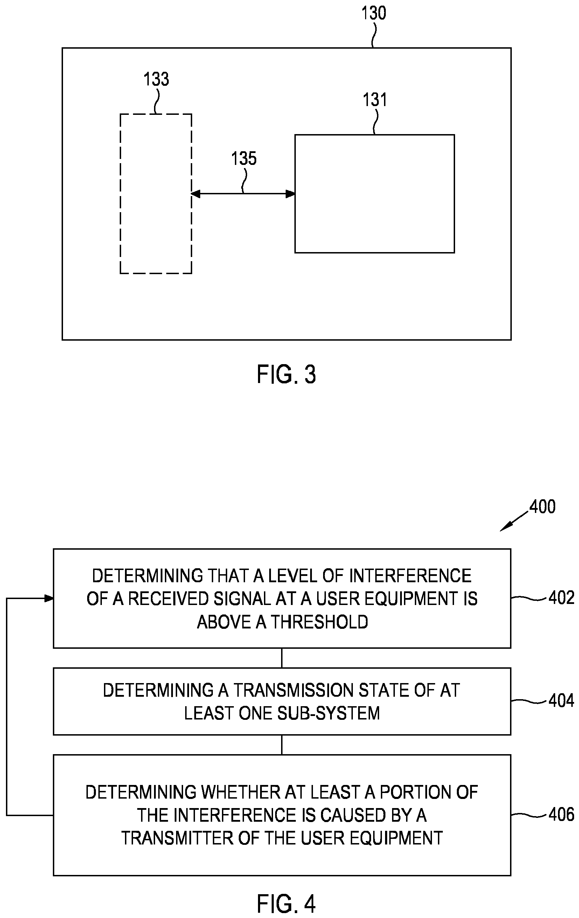

FIG. 3 schematically illustrates an example of a user equipment (UE) 130. Various features referred to in relation to FIG. 3 can be found in the other FIGs.

In the example of FIG. 3 the UE 130 comprises means 131 for:
determining that a level of interference of a received signal 134 at the UE 130 is above a threshold;
determining a transmission state of at least one sub-system 136 of the UE 130; and
determining based, at least in part, on the determining that a level of interference of a received signal 134 is above a threshold and the determined transmission state of at least one sub-system 136 whether at least a portion of the interference is caused by a transmitter 138 of the UE 138.

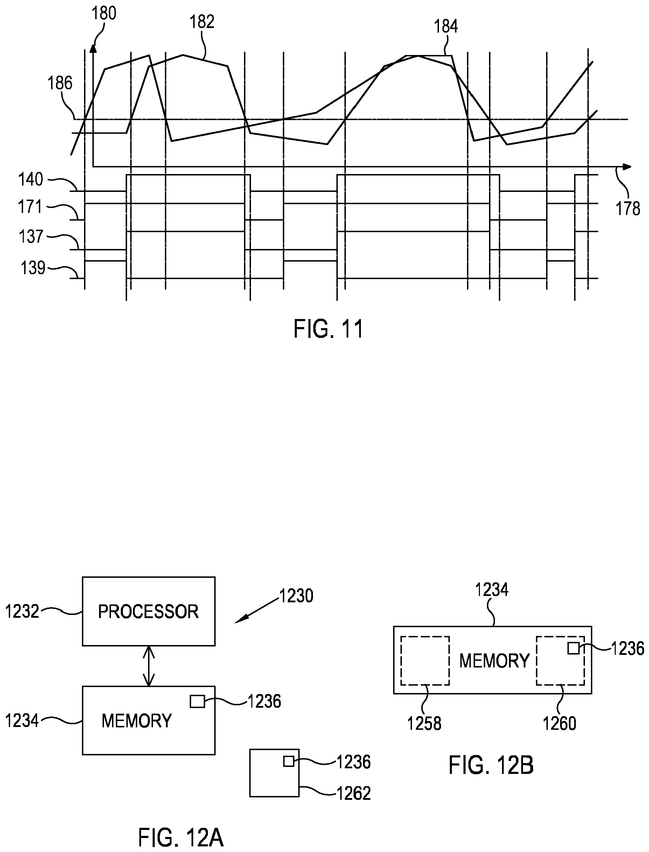

The means can comprise at least one processor; and at least one memory storing instructions that, when executed by the at least one processor, cause the performance of the UE 130. See, for example, FIG. 12A and 12B.

As used herein, an apparatus and/or device and/or component for performing one or more actions should also be considered to disclose an apparatus and/or device and/or component configured to perform the one or more actions.

Similarly, as used herein, an apparatus and/or device and/or component configured to perform one or more actions should also be considered to disclose an apparatus and/or device and/or component for performing the one or more actions.

In the illustrated example, the means 131 are configured to receive signals from at least one component 133 of the UE 130 and to transmit signals to at least one component 133 of the UE 130.

The at least one component 133 can comprise any suitable component or components. For example, the at least one component can comprise at least one antenna 166, circuitry, for example baseband circuitry and/or RF circuitry, at least one sub-system 136 and so on.

FIG. 4 illustrates an example of a method 400.

One or more of the features discussed in relation to FIG. 4 can be found in one or more of the other FIGs.

In examples, method 400 can be considered a method 400 of determining source information of received interfering signals 134.

In examples, method 400 can be considered a method 400 of determining timing information of internal and/or external received interfering signals 134.

In examples, method 400 can be considered a method 400 of enabling effective and/or efficient mitigation of interference from at least one internal and/or external source of interference.

Method 400 can be performed by any suitable apparatus comprising any suitable means. For example, method 400 can be performed by the UE 130 of FIG.1 and/or FIG. 5, and/or FIG. 6, and/or FIG. 7, and/or an apparatus/controller 1130 of FIGs 11A and 11B.

Method 400 can be performed by a sub-system 136 of a UE 130 comprising a plurality of sub-systems 136.

At block 402, method 400 comprises determining that a level of interference of a received signal 134 at the UE 130 is above a threshold. In examples, the UE 130 is a UE 130 comprising a plurality of sub-systems 136 configured to transmit electromagnetic signals.

The received signal 134 can be considered a received interfering signal 134, see, for example, FIG. 2.

In examples, block 402 comprises determining that an amount of power of a received signal 134 that is in a predetermined frequency band or bands is greater than a threshold. For example, block 402 can comprise determining that an amount of power of a received signal 134, that is in a frequency band or bands that will cause reception interference for a sub-system of a UE 130, is above a threshold.

Any suitable threshold can be used. For example, any suitable threshold can be used to enable background noise to be differentiated from received interfering signals 134. For example a threshold can be X dB above noise floor of receiver.

For example, the threshold can be calculated as: -174 dBm/Hz + receiver noise figure + X dB. In examples with a noise figure of 10 dB: -154 dBm/Hz if X is 10 dB.

In examples, X = 10 dB is enough to ensure small risk of "false detection" of received interfering signals 134. However, in some examples, X can be in the range 10 dB to 50 dB.

In examples, determining that a level of interference of a received signal 134 at a UE 130 is above a threshold comprises comparing a signal 144 indicative of the power of the received signal 134 and a reference signal level 146.

Determining that a level of interference of a received signal 134 at a UE 130 is above a threshold can comprise receiving an output from a comparator 170 that takes as input the output of an envelope detector 168 and a reference signal 146.

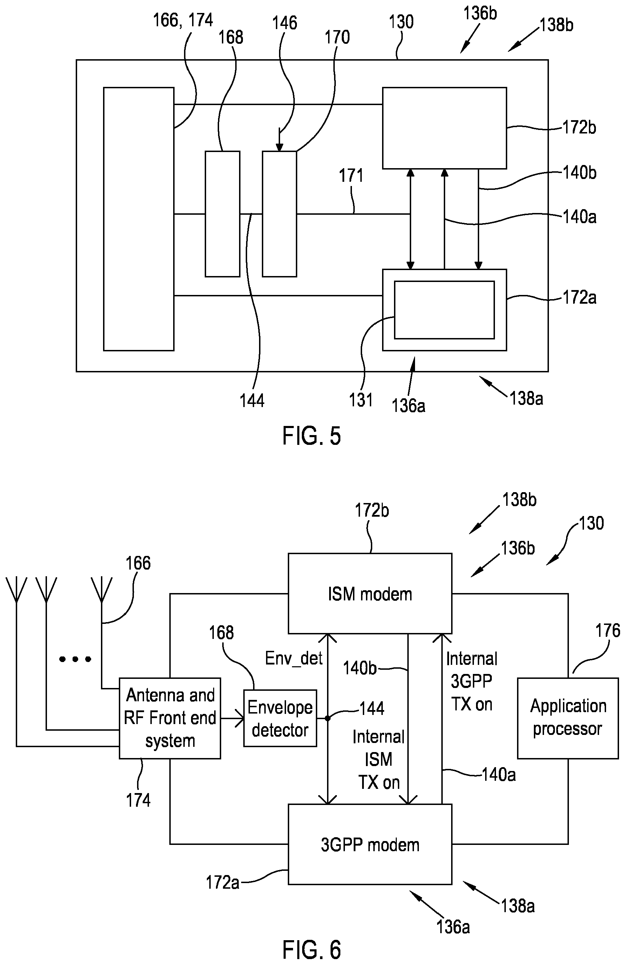

By way of example, reference is made to the example of FIG. 5.

FIG. 5 schematically illustrates an example of a user equipment (UE) 130. The UE 130 of FIG. 5 can be an example of a UE 130 as shown in FIG. 1.

In the example of FIG. 5, the UE 130 comprises a first sub-system 136a and a second sub-system 136b. In FIG. 5, the first sub-system 136a comprises a first modem 172a and the second sub-system 136b comprises a second modem 172b.

The first sub-system 136a is a 3GPP sub-system 136a and the first modem 172a is a 3GPP modem 172a.

The second sub-system 136b is a sub-system 136 configured to, at least, transmit in the industrial, scientific, and medical (ISM) frequency band, and can be considered an ISM sub-system 136b comprising an ISM modem 172b.

The first and second sub-systems 136a, 136b can be considered first and second transmitters 138a, 138b of the UE 130.

However, in examples, the UE 130 can comprise any suitable type of modem(s) configured to operate with any suitable RAT(s).

In the example of FIG. 5, the 3GPP modem 172a comprises the means 131 illustrated in the example of FIG. 1.

In FIG. 5, the UE 130 comprises a plurality of antennas 166 and a front end RF system 174 configured to transmit and/or receive signals for the first and second sub-systems 136a, 136b.

The antennas 166 and RF front end system are configured to receive interfering signals 134, for example from the point of view of the first sub-system 136, and to output RF power to an envelope detector 168.

The envelope detector 168 is configured to receive the output from the antennas 166 and RF front end system 174 and output an analogue voltage which is proportional to the RF power at the input. The output of the envelope detector 168 can be considered a signal 144 indicative of the power of the received signal 134.

The signal 144 output by the envelope detector 168 is input to a comparator 170 with a reference signal 146. The reference signal 146 is configured to provide a reference signal level for the comparator 146 to allow a determination as to whether the signal 144 is greater than the reference signal level.

The reference signal level can be a voltage. The reference signal level can be considered a threshold.

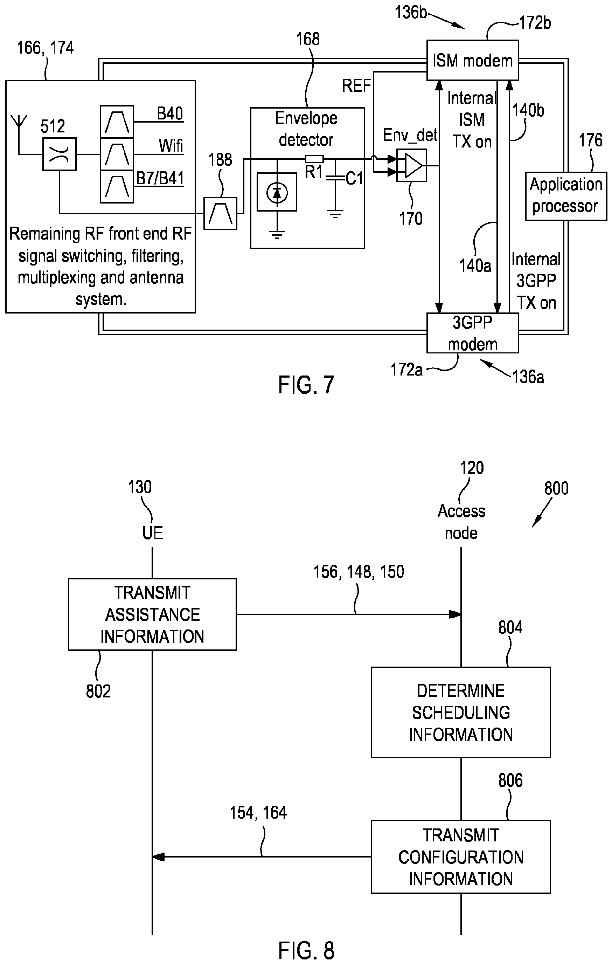

The reference signal 146 can be provided by any suitable component or components of the UE 130. For example, the reference signal 170 can be provided by a controller and/or modem 172 of the UE 130. See, for example, FIG. 7.

In the illustrated example, the comparator 170 is configured to compare the two voltages (signals 144 and 146) and provide an output 171 indicating the result of the comparison. For example, the output 171 can be configured to indicate whether the signal 144 is greater than the reference signal level.

The output 171 can have any suitable form. In examples, the output 171 is a logical 1 or 0 indicating which of the two voltages has the largest value. For example, the output 171 can have a value of 1 if the signal 141, indicative of the power of the received signal 134, is greater than the reference signal level.

The output of the comparator 171 is input to the first modem 172a and second modem 172b.

The other features of FIG. 5 will be discussed later. Returning to the example of Fig. 4, at block 404 method 400 comprises determining a transmission state of at least one sub-system 136 of the UE 130.

A transmission state of a sub-system 136 can comprise transmitting or not transmitting.

Accordingly, in examples, block 404 can comprise determining whether at least one sub-system 136 of the UE 130 is transmitting or is not transmitting.

In some examples, determining the transmission state of at least one sub-system 136 of the UE 130 comprises receiving an indication 140 that a transmitter 138 of the at least one sub-system 136 of the UE is active.

The indication 140 can have any suitable form to indicate that a transmitter 138 of the at least one sub-system 136 of the UE 130 is active, and can be provided/received in any suitable way.

In examples, the indication 140 comprises transmission scheduling information for at least one sub-system 136 of the UE 130. The transmission scheduling information can, for example, indicate when the sub-system 136 is scheduled to transmit and therefore when a transmitter of the UE 130 is scheduled to be active.

In such examples, the different sub-systems 136 of the UE 130 can exchange information, such as clock information, to allow real time synchronization to be maintained.

In some examples, the indication 140 comprises a signal configured to indicate that a transmitter 138 of the at least one sub-system 136 of the UE 138 is active. The signal configured to indicate that a transmitter 138 of the at least one sub-system 136 of the UE 130 is active can be received from any suitable source, for example from any suitable component or components of the UE 130.

For example, at least one component of a first sub-system 136a of a UE 130 can be configured to transmit a signal to at least a second sub-system 136b of a UE 130 to provide an indication that a transmitter 138a of the first sub-system 136a is active and/or that the first sub-system 136a is transmitting.

Similarly, at least one component of a second sub-system 136b of a UE 130 can be configured to transmit a signal to at least a first sub-system 136a of a UE 130 to provide an indication that a transmitter 138b of the second sub-system 136b is active and/or that the second sub-system 136b is transmitting.

In examples, the indication 140 can provide information of the timing and duty cycle of the transmission of the transmitter 138 of the UE 130. For example, a signal configured to provide the indication 140 can comprise information indicating the timing and duty cycle of the transmission.

A signal configured to provide an indication that a transmitter 138 of at least one sub-system 136 of a UE 130 is active can be considered a Tx on signal.

A signal to indicate that a transmitter 138 of at least one sub-system 136 of the UE 130 is active can be provided and/or transmitted and/or received in any suitable way using any suitable method.

In some examples, at least one signal line is provided between sub-systems 136 of a UE 130 to allow a signal to be transmitted to provide an indication 140 that a transmitter 138 of at least one sub-system 136 of the UE 130 is active.

For example, the signal can be provided as a single line logical (GPIO) hardware signal, and/or 3 wire interface, and/or I2C interface and so on.

By way of example, reference is made to the example of FIG. 5.

In FIG. 5, the first sub-system 136a is configured to transmit an indication 140a to the second sub-system 136b to indicate that a transmitter 138a of the first sub-system 136a is active.

Similarly, the second sub-system 136b is configured to transmit an indication 140b to the first sub-system 136a to indicate that a transmitter 138b of the second sub-system 136b is active.

In the illustrated example, a signal line is provided between the first modem 172a and the second modem 172b configured to transmit a signal to the second modem 172b to provide an indication 140a that a transmitter 138a of the first sub-system 136a is active.

Similarly, in the illustrated example, a signal line is provided between the second modem 172b and the first modem 172a configured to transmit a signal to the first modem 172a to provide an indication 140b that a transmitter 138b of the second sub-system 136b is active.

In the example of FIG. 5, it can be considered that the UE 130 is configured to allow the modems 172a, 172b to transmit Tx on signals to indicate to the other modem 172 that a transmitter 138 of at least one sub-system 136 is active.

Returning to the example of FIG. 4, at block 406 method 400 comprises determining based, at least in part, on the determining that a level of interference of a received signal 134 is above a threshold and the determined transmission state of at least one sub-system 136 whether at least a portion of the interference is caused by a transmitter 138 of the UE 130.

Consequently, FIG. 4 illustrates a method 400 comprising:
determining that a level of interference of a received signal 134 at a UE 130 is above a threshold;
determining a transmission state of at least one sub-system 136 of the UE 130; and
determining based, at least in part, on the determining that a level of interference of a received signal 134 is above a threshold and the determined transmission state of at least one sub-system 136 whether at least a portion of the interference is caused by a transmitter 138 of the UE 130.

At block 406, the information that a level of interference of a received signal 134 is above a threshold and the determined transmission state of at least one sub-system 136 of the UE 130 can be processed, and/or analysed, and/or manipulated in any suitable way to determine whether at least a portion of the interference is caused by a transmitter 138 of the UE 130.

It can be considered that, at block 406, method 400 comprises determining whether at least a portion of the interference is internal interference.

Examples of the disclosure enable a determination as to whether at least a portion of the interference is caused by a transmitter 138 of the UE, and consequently examples of the disclosure also enable a determination as to whether the interference is caused by a source external to the UE 130. That is, examples of the disclosure enable a UE 130 comprising multiple sub-systems 136 to determine when a sub-system 136 of the UE 130 is experiencing received interference from a source external to the UE 130.

In some examples, method 400 comprises determining that the source of at least part of the interference is internal to the UE 130 or that the source of the interference is external to the UE 130, wherein the determining is based, at least in part, on the determining that a level of interference of a received signal 134 is above a threshold and the determined transmission state of at least one sub-system 136.

Information regarding the source of the interference can be considered source information 150. For example, source information can comprise information indicating whether the source of interference is internal and/or external to the UE 130.

This is advantageous and/or provides technical benefits. For example, determining that the source of at least part of the interference is internal to the UE 130 or that the source of the interference is external to the UE 130 enables appropriate interference mitigation to be performed. For example, determining that the source of at least part of the interference is internal to the UE 130 or that the source of the interference is external to the UE 130 can enable time division multiplexing (TDM) with regard to a periodic external interference source which would not be possible otherwise.

In some examples, determining whether at least a portion of the interference is caused by a transmitter 138 of the UE 130 comprises determining whether at least one transmitter 138 of at least one sub-system 136 of the UE 130 is on while the interference is received.

In examples, determining whether at least one transmitter 138 of at least one sub-system 136 of the UE 130 is on comprises determining whether an indication 140, such as a Tx on signal, is received while the interference is received.

In examples, it can be considered that interference is being received when an output of the comparator 170 of FIG. 5, for example, indicates that the power of the received interfering signal 134 is greater than a threshold.

Accordingly, in examples, at least one indication 140 and the output of the comparator 170 of FIG. 5, for example, can be used to determine that the source of at least part of the interference is internal to the UE 130 or that the source of the interference is external to the UE 130

By way of example, reference is made to the example of FIG. 11.

The upper portion of FIG. 11 shows a plot of interference level on the y axis 180 for a sub-system 136 of a UE 130 comprising a plurality of sub-systems 136 and time on the x axis 178.

Two lines 182, 184 are shown on the graph. Line 182 represents internal (IDC) interference and line 184 represents external interference.

Also indicated by a horizontal dotted line 186 on the graph in FIG. 11 is the comparator level. This represents, for example, the reference signal level and can be considered to indicate the threshold used to determine if there is interference.

In the illustrated example, received interference from internal and external sources varies with time.

The bottom portion of FIG. 11 shows four signal diagrams for the interference signals 182, 184 in the graph of FIG. 11.

The upper line 140 shows the state of an indication 140 received, for example, by a sub-system 136 of a UE 130. In the illustrated example, the line 140 shows the state of a Tx on signal 140 for an ISM modem 172.

Line 140 is positive when the Tx signal is on, indicating that a transmitter 138 of at least one sub-system 136 of the UE 130 is active.

The second line down 171 shows the output of the comparator 170 of, for example, FIG. 5. The line 171 is positive when the received interference is above the reference line 186.

The third line down 137 illustrates the result of an AND operation between the comparator output (line 171) and the indication 140. This enables a determination that there is internal interference. That is another transmitter 138 of the UE 130 is active when there is received interference, meaning that a source of the interference is internal to the UE 130.

It is possible that there is also an external component to the received interference. Therefore, line 137 is positive when at least a portion of received interference is from a source internal to the UE 130.

The bottom line 139 shows the result of an AND operation on the negated indication 140 and the comparator output (line 171). This enables a determination that there is pure external interference. That is, interference is being received while another transmitter 138 of the UE 130 is inactive meaning that the source of the interference is external to the UE 130.

FIG. 11 therefore illustrates an example of how the determining that a level of interference of a received signal 134 is above a threshold and the determined transmission state of at least one sub-system 136 of a UE 130 can be used to determine that the source of at least part of the interference is internal to the UE 130 or that the source of the interference is external to the UE 130.

Returning to the example of FIG. 4, in examples, the sub-systems 136 of a UE 130 comprising a plurality of sub-systems 136 are configured to indicate the state of the transmitter 138, and the indication of the state of the transmitter can be combined with, for example, the envelope detector 168 and the comparator 170 to detect that there is interference that will affect receiving of a sub-system 136 and at the same time clearly distinguish whether the source of the interference is purely external or a combination of external and internal sources.

In examples, method 400 can be repeated over a period of time. This is illustrated by the arrow linking block 406 and block 402.

Accordingly, method 400 can be performed for a plurality of received interfering signals 134 allowing timing information 148 for received interfering signals 134 to be determined.

Timing information 148 can be considered information regarding timing of received interfering signals 134 from internal and/or external sources. For example, timing information 148 can comprise periodicity for recurring interfering signals 134 from internal and/or external sources.

Accordingly, examples of the disclosure enable timing information 148, such as periodicity, for external sources of interference to be determined, as well as for internal sources of interference.

In some examples, method 400 comprises determining, for a plurality of received signals 134 received over a period of time, whether at least a portion of each of the plurality of received signals 134 is caused by a transmitter 138 of the UE 130, and determining timing information 148 for received signals 134 from at least one source that is internal to the UE 130 and/or at least one source that is external to the UE 130.

This is advantageous and/or provides technical benefits. For example, determining timing information for at least one source that is internal to the UE 130 and/or at least one source that is external to the UE 130 can allow appropriate mitigation technique(s) to be used with regard to the received interference.

For example, examples of the disclosure enable, for example, a sub-system 136 of a UE 130 comprising a plurality of sub-systems to distinguish an external source of interference and to implement TDM to mitigate periodic external interference which would not be possible otherwise.

As discussed above, method 400 can be performed by a sub-system 136 of a UE 130 comprising a plurality of sub-systems 136, see, for example, FIG. 2.

In examples, method 400 can be performed by a 3GPP sub-system. See, for example, FIG. 5, and/or FIG. 6, and/or FIG. 7.

In such examples, scheduling for transmission and/or reception is controlled by the network.

Accordingly, in some such examples, the UE 130 can provide the determined timing information 148 and, in some examples, source information 150 to the network to enable scheduling to be configured to avoid the interference.

In some examples, method 400 comprises transmitting the determined timing information 148 and associated determined information regarding the source of the received signals 134 towards a network node, for example an access node 120, and receiving, from the network node, configuration information 154 for scheduling of transmission and/or reception of information by at least one sub-system 136 of the UE 130 to reduce interference by received signals 134.

Information for scheduling of transmission and/or reception of information can be considered scheduling information 164.

For example, the network can schedule transmission and/or reception of information by at least one sub-system 136 of the UE 130 to at least partially employ TDM to avoid interference from the received signals 134 if possible.

If it is not possible to completely avoid the received interference, and/or while waiting for rescheduling to avoid the interference, method 400 can comprise employing at least one interference mitigation technique to reduce interference from the received signals 134.

Examples of interference mitigation techniques are minimum mean square error-interference rejection combining (MMSE-IRC) and the like.

Additionally, or alternatively interference mitigation techniques using hardware can be used, for example, at least one of tunable antennas, tunable filters, analog interference cancellation, beam nulling, configuration of filter banks can be tuned to reduce interference from the received signals 134.

Accordingly, examples of the disclosure enable TDM solutions to be used for external interference mitigation if, for example, the external interference is detected to have a periodicity that allows such mitigation to operate. For example, if it is determined that the 'on' period of the external interference source if not too long, and, in some examples, that the frequency of the external interference fits options in the 3GPP system to use TDM methods.

Examples of the disclosure enable time synchronization between 3GPP modems and modems from other systems whereby interference (co-existence) problems can be avoided. Knowledge about transmit "Tx" and receive "Rx" duration and timing pattern from both systems enable both modems to mitigate and avoid co-existence problems.

FIG. 6 schematically illustrates an example of a user equipment (UE) 130. The UE 130 of FIG. 6 can be an example of a UE 130 as shown in FIG. 1.

FIG. 6 is similar to the example of FIG. 5. However, in the example of FIG. 6 the UE 130 comprises an application processor 176. In the illustrated example, the application processor is a central processor that controls all of the sub-systems 1136.

FIG. 7 schematically illustrates an example of a user equipment (UE) 130. The UE 130 of FIG. 7 can be an example of a UE 130 as shown in FIG. 1.

FIG. 7 is similar to the example of FIG. 6, however greater detail of the components of the UE 130 is shown in the example of FIG. 7.

Furthermore, in the example of FIG 7, a filter 168 is located between the output of the antennas 166 and RF front end system 174 and the input to the envelope detector 168.

The filter 188 is configured to filter the signals received by the antennas 166 to potentially interfering signals 134 for a sub-system 136, such as a 3GPP sub-system 136a.

FIG. 8 illustrates an example of a method 800.

In examples, FIG. 8 can be considered to illustrate a plurality of methods. For example, FIG. 8 illustrates one or more actions at a plurality of actors/entities. In examples, FIG. 8 can be considered to illustrate a plurality of methods performed by the individual actors/entities.

One or more of the features discussed in relation to FIG. 8 can be found in one or more of the other FIGs.

In the example of FIG. 8, a plurality of apparatuses transmit and/or receive one or more signals and/or one or more messages across and/or via and/or using a network. In examples, any suitable form of communication in any suitable network can be used. For example, at least a portion of the network 100 of FIG. 1 can be used.

Accordingly, in examples, the plurality of apparatuses in FIG. 8 form at least a portion of a network 100 as described in relation to FIG. 1.

In the illustrated example, a UE 130 and an access node 120, for example a gNodeB (gNB) transmit and/or receive one or more signals and/or one or more messages.

In examples, communications and/or transmissions between elements illustrated in FIG. 8 can proceed via any number of intervening elements, including no intervening elements.

Although one UE 130 is illustrated in the example of FIG. 8, in examples any suitable number of UEs 130 can be included. Similarly, in examples, any suitable number of access nodes 120 can be included.

As used herein, a description of an action should also be considered to disclose enabling, and/or causing, and/or controlling that action. For example, a description of transmitting information should also be considered to disclose enabling, and/or causing, and/or controlling transmitting information.

For example, a description of an apparatus transmitting information should also be considered to disclose at least one controller of the apparatus enabling, and/or causing, and/or controlling the apparatus to transmit the information.

In examples, method 800 and/or at least a part of method 800 can be considered a method of mitigating interference.

In examples, method 800 and/or at least a part of method 800 can be considered a method of reporting timing and source information of interference received at a UE 130.

In examples, method 800 and/or at least a part of method 800 can be considered a method of employing TDM in relation to external interference at a UE 130.

In the illustrated example, the location of the blocks indicates the entity performing the action(s). For example, block 804 is performed by the access node 120.

At block 802, method 800 comprises transmitting assistance information 156 by a UE 130 towards a network node, the assistance information 156 comprising timing information 148 of interfering received signals 134 at the UE 130 and associated source information 150, wherein the source information 150 indicates whether the source of at least a portion of the interference is caused by a transmitter 138 of the UE 130 or if the interference is caused by a source external to the UE 130.

FIG. 8 illustrates one or more actions of transmitting, therefore FIG. 8 also illustrates the corresponding transmitting/enabling and/or causing transmitting feature(s)/action(s). For example, from the point of view of the access node 120, at block 802, method 800 comprises receiving assistance information 156 from a UE 130, the assistance information 156 comprising timing information 148 of interfering received signals 134 at the UE 130 and associated source information 150, wherein the source information indicates whether the source of at least a portion of the interference is caused by a transmitter 138 of the UE 130 or if the interference is caused by a source external to the UE 130.

At block 804, method 800 comprises determining based, at least in part, on the received assistance information 156 scheduling information 164 for transmission and/or reception of information by at least one sub-system 136 of the UE 130 to reduce interference by received signals 134.

In examples, scheduling information 164 can be determined to schedule transmission and/or reception of information by at least one sub-system 136 of the UE 130 to avoid transmitting and/or receiving when interfering signal(s) are being received based, at least in part, on the received assistance information 156.

At block 806, method 800 comprises transmitting, towards the UE 130, configuration information 154 to configure the UE 130 for transmission and/or reception according to the scheduling information 164.

Consequently, FIG. 8 illustrates a method 800 comprising:
receiving assistance information 156 from a UE 130, the assistance information 156 comprising timing information 148 of interfering received signals at the UE 130 and associated source information 150, wherein the source information 150 indicates whether the source of at least a portion of the interference is caused by a transmitter of the UE 130 or if the interference is caused by a source external to the UE 130;
determining based, at least in part, on the received assistance information 156 scheduling information 164 for transmission and/or reception of information by at least one sub-system 136 of the UE 130 to reduce interference by received signals 134; and
transmitting, towards the UE 130, configuration information 154 to configure the UE 130 for transmission and/or reception according to the scheduling information 164.

In examples, the configuration information 154 can be transmitted in any suitable way, for example using any suitable message or messages.

In some examples, block 806 comprises transmitting an RRCReconfiguration message.

In examples, method 800 can be considered to comprise determining the configuration information 154.

From the point of view of the UE 130, block 806 comprises receiving, from the network node, configuration information 154 for scheduling of transmission and/or reception of information by at least one sub-system of the UE 130 to reduce interference by received signals 134.

Consequently, FIG. 8 illustrates a method 800 comprising:
transmitting assistance information 156 by a UE 130 towards a network node, the assistance information 156 comprising timing information 148 of interfering received signals 134 at the UE 130 and associated source information 150, wherein the source information 150 indicates whether the source of at least a portion of the interference is caused by a transmitter 138 of the UE 130 or if the interference is caused by a source external to the UE; and
receiving, from the network node, configuration information 154 for scheduling of transmission and/or reception of information by at least one sub-system 136 of the UE 130 to reduce interference by received signals.

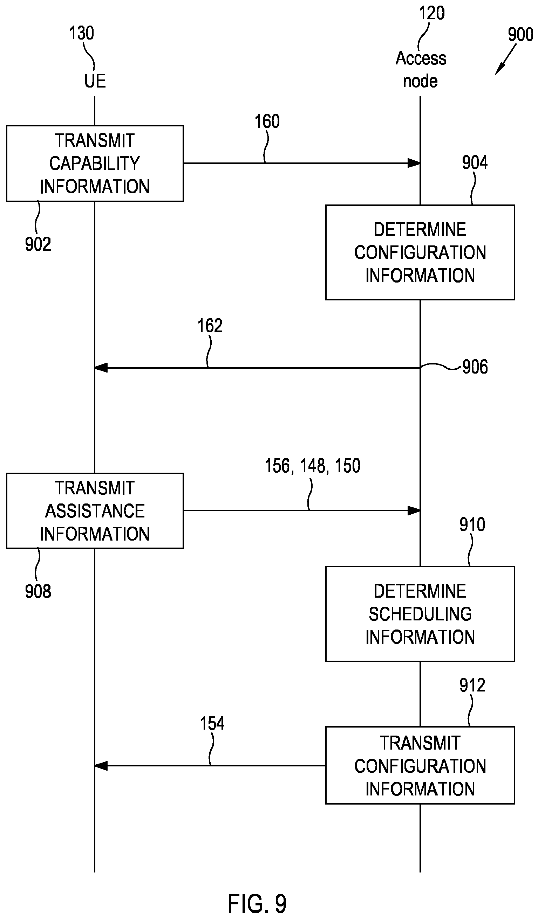

FIG. 9 illustrates an example of a method 900.

In examples, FIG. 9 can be considered to illustrate a plurality of methods. For example, FIG. 9 illustrates one or more actions at a plurality of actors/entities. In examples, FIG. 9 can be considered to illustrate a plurality of methods performed by the individual actors/entities.

One or more of the features discussed in relation to FIG. 9 can be found in one or more of the other FIGs.

In the example of FIG. 9, a plurality of apparatuses transmit and/or receive one or more signals and/or one or more messages across and/or via and/or using a network. In examples, any suitable form of communication in any suitable network can be used. For example, at least a portion of the network 100 of FIG. 1 can be used.

Accordingly, in examples, the plurality of apparatuses in FIG. 9 form at least a portion of a network 100 as described in relation to FIG. 1.

In the illustrated example, a UE 130 and an access node 120, for example a gNodeB (gNB) transmit and/or receive one or more signals and/or one or more messages.

In examples, communications and/or transmissions between elements illustrated in FIG. 9 can proceed via any number of intervening elements, including no intervening elements.

Although one UE 130 is illustrated in the example of FIG. 9, in examples any suitable number of UEs 130 can be included. Similarly, in examples, any suitable number of access nodes 120 can be included.

In examples, method 900 and/or at least a part of method 900 can be considered a method of mitigating interference.

In examples, method 900 and/or at least a part of method 900 can be considered a method of reporting timing and source information of interference received at a UE 130.

In examples, method 900 and/or at least a part of method 900 can be considered a method of employing TDM in relation to external interference at a UE 130.

In the illustrated example, the location of the blocks indicates the entity performing the action(s). For example, block 904 is performed by the access node 120.

At block 902, method 900 comprises transmitting, by the UE 130, towards the network node capability information 160 indicating the capability of the UE 130 to determine and report source information 150 of interfering received signals 134.

The capability information 160 can have any suitable form. For example, the capability information can have any suitable form to indicate the capability of the UE 130 to determine and report source information 150 of interfering received signals 134.

In examples, the capability information 160 is configured to inform the network node that the UE 130 can determine source information as described, for example, in relation to FIG. 4.

From the point of view of the network node, block 902 comprises receiving, from the UE 130, capability information 160 indicating the capability of the UE 130 to determine and report source information 150 of interfering received signals 134.

At block 904, method 900 comprises determining based, at least in part, on the received capability information 160, configuration information 162 to configure the UE 130 to determine and report source information 150 of interfering received signals 134.

The configuration information 162 can have any suitable form. For example, the configuration information 162 can have any suitable form to configure the UE 130 to determine and report source information 150 of interfering received signals 134.

For example, the configuration information 162 can comprise information to configure the UE 130 to perform a method 400 as described in relation to FIG. 4.

At block 906, method 900 comprises transmitting the configuration information 162 towards the UE 130.

Consequently, method 900 comprises determining based, at least in part, on the received capability information 160, configuration information 162 to configure the UE 130 to determine and report source information 150 of interfering received signals 134; and
transmitting the configuration information 162 towards the UE 130.

In examples, the configuration information 162 can be transmitted in any suitable way, for example using any suitable message or messages.

In some examples, block 806 comprises transmitting an RRCsetup or an RRCReconfiguration message.

From the point of view of the UE 130, block 906 comprises receiving, from the network node, configuration information 162 to configure the UE 130 to determine and report source information 150 of interfering received signals 134.

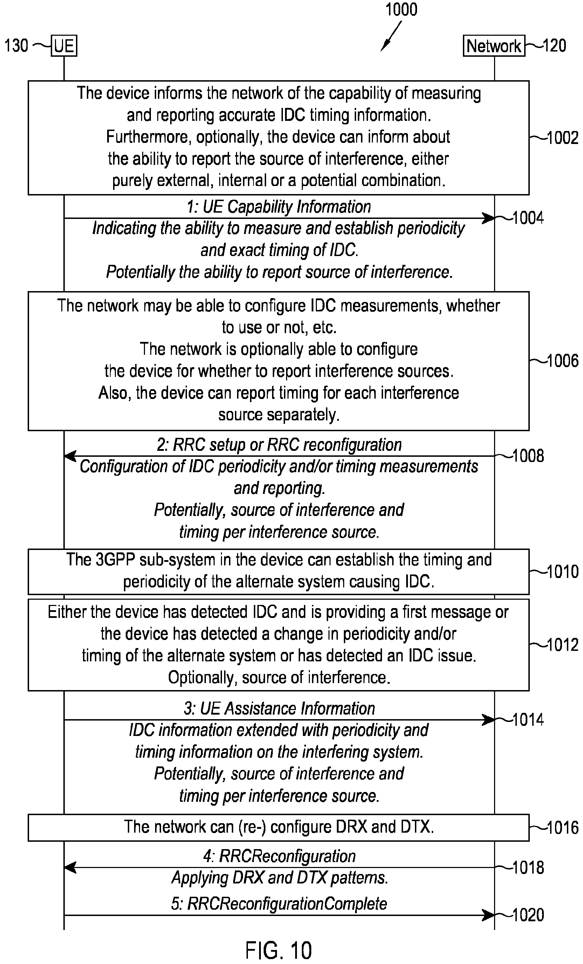

FIG 10 illustrate examples of a method 1000.

Some examples relate to third generation Partnership Project (3GPP) network. FIG. 10 can be considered to illustrate some such examples.

In examples, FIG. 10 can be considered to illustrate a plurality of methods. For example, FIG. 10 illustrates one or more actions at a plurality of actors/entities. In examples, FIG. 10 can be considered to illustrate a plurality of methods performed by the individual actors/entities.

As can be seen in Figure 11, in method 1000:
The UE 130 can report its capabilities in relation to identifying interference sources and whether or not timing of the interference can be established.

The network can configure the UE 130 to use its abilities to establish the sources of interference and the timing for each source.

The UE 130 can inform the network about interference sources and interference timing.

Examples of the disclosure are advantageous and/or provide technical benefits.

For example, examples of the disclosure enable a UE to determine source information regarding received interfering signals.

For example, examples of the disclosure enable a UE to use appropriate interference mitigation methods for the determined interference sources.

For example, examples of the disclosure provide:
- better utilization of frequency spectrum as adjacent spectrum (3GPP/ISM) resources can be used more efficiently,
- higher potential throughput,
- enhanced quality of service for all RATs,
- Wi-Fi TX and 3GPP TX can be done simultaneously and potentially with partial overlap in order to free up time slots for reception at both systems,
- RF front end filter requirements can be relaxed for the ISM modem as well as for the 3GPP modem which in turn enable lower power consumption and lower receive noise figure. Alternatively, or additionally, cheaper filters can be used,
- improvement of algorithm that controls ISM band "listen before talk requirements" as busy" WiFi channel measurement due to high adjacent channel leakage ratio (ACLR) from a 3GPP transmitter is avoided,
- identifying source of interference, both UE internally and towards 3GPP network, other sub-systems, and so on. This in turn enable the systems to use the best mitigation method.

Fig 12A illustrates an example of an apparatus 1230. The apparatus 1230 may be a controller of an apparatus or device such as a terminal node 110, for example a UE 130, or access node 120 such as an eNB or gNB. The apparatus 130 may be considered a controller.

Implementation of a controller 1230 may be as controller circuitry. The controller 1230 may be implemented in hardware alone, have certain aspects in software including firmware alone or can be a combination of hardware and software (including firmware).

As illustrated in Fig 12A the controller 1230 may be implemented using instructions that enable hardware functionality, for example, by using executable instructions of a computer program 1236 in a general-purpose or special-purpose processor 1232 that may be stored on a computer readable storage medium (disk, memory etc.) to be executed by such a processor 1232.

The processor 1232 is configured to read from and write to the memory 1232. The processor 1232 may also comprise an output interface via which data and/or commands are output by the processor 1232 and an input interface via which data and/or commands are input to the processor 1232.

The memory 1234 stores a computer program 1236 comprising computer program instructions (computer program code) that controls the operation of the apparatus 1230 when loaded into the processor 1232. The computer program instructions, of the computer program 1236, provide the logic and routines that enables the apparatus to perform the methods illustrated in the accompanying Figs. The processor 1232 by reading the memory 1234 is able to load and execute the computer program 1236.

The apparatus 1230 comprises:
at least one processor 1232; and
at least one memory 1234 including computer program code the at least one memory 1234 and the computer program code configured to, with the at least one processor 1232, cause the apparatus 1230 at least to perform:
   determining that a level of interference of a received signal 134 at a UE 130 is above a threshold;
   determining a transmission state of at least one sub-system 136 of the UE 130; and
   determining based, at least in part, on the determining that a level of interference of a received signal 134 is above a threshold and the determined transmission state of at least one sub-system 136 whether at least a portion of the interference is caused by a transmitter 138 of the UE 130.

The apparatus 1230 comprises:
at least one processor 1232; and
at least one memory 1234 including computer program code
the at least one memory 1234 and the computer program code configured to, with the at least one processor 1232, cause the apparatus 1230 at least to perform:
   transmitting assistance information 156 by a UE 130 towards a network node, the assistance information 156 comprising timing information 148 of interfering received signals 134 at the UE 130 and associated source information 150, wherein the source information 150 indicates whether the source of at least a portion of the interference is caused by a transmitter 138 of the UE 130 or if the interference is caused by a source external to the UE; and
   receiving, from the network node, configuration information 154 for scheduling of transmission and/or reception of information by at least one sub-system 136 of the UE 130 to reduce interference by received signals.

The apparatus 1230 comprises:
at least one processor 1232; and
at least one memory 1234 including computer program code
the at least one memory 1234 and the computer program code configured to, with the at least one processor 1232, cause the apparatus 1230 at least to perform:
   receiving assistance information 156 from a UE 130, the assistance information 156 comprising timing information 148 of interfering received signals at the UE 130 and associated source information 150, wherein the source information 150 indicates whether the source of at least a portion of the interference is caused by a transmitter of the UE 130 or if the interference is caused by a source external to the UE 130;
   determining based, at least in part, on the received assistance information 156 scheduling information 164 for transmission and/or reception of information by at least one sub-system 136 of the UE 130 to reduce interference by received signals 134; and
   transmitting, towards the UE 130, configuration information 154 to configure the UE 130 for transmission and/or reception according to the scheduling information 164.

The apparatus 1230 comprises:
at least one processor 1232; and
at least one memory 1234 storing instructions that, when executed by the at least one processor 1232, cause the apparatus at least to:
determining that a level of interference of a received signal 134 at a UE 130 is above a threshold;
determining a transmission state of at least one sub-system 136 of the UE 130; and
determining based, at least in part, on the determining that a level of interference of a received signal 134 is above a threshold and the determined transmission state of at least one sub-system 136 whether at least a portion of the interference is caused by a transmitter 138 of the UE 130.

The apparatus 1230 comprises:
at least one processor 1232; and
at least one memory 1234 storing instructions that, when executed by the at least one processor 1232, cause the apparatus at least to:
transmitting assistance information 156 by a UE 130 towards a network node, the assistance information 156 comprising timing information 148 of interfering received signals 134 at the UE 130 and associated source information 150, wherein the source information 150 indicates whether the source of at least a portion of the interference is caused by a transmitter 138 of the UE 130 or if the interference is caused by a source external to the UE; and
receiving, from the network node, configuration information 154 for scheduling of transmission and/or reception of information by at least one sub-system 136 of the UE 130 to reduce interference by received signals.

The apparatus 1230 comprises:
at least one processor 1232; and
at least one memory 1234 storing instructions that, when executed by the at least one processor 1232, cause the apparatus at least to:
receiving assistance information 156 from a UE 130, the assistance information 156 comprising timing information 148 of interfering received signals at the UE 130 and associated source information 150, wherein the source information 150 indicates whether the source of at least a portion of the interference is caused by a transmitter of the UE 130 or if the interference is caused by a source external to the UE 130;
determining based, at least in part, on the received assistance information 156 scheduling information 164 for transmission and/or reception of information by at least one sub-system 136 of the UE 130 to reduce interference by received signals 134; and
transmitting, towards the UE 130, configuration information 154 to configure the UE 130 for transmission and/or reception according to the scheduling information 164.

As illustrated in Fig 12A, the computer program 1236 may arrive at the apparatus 1230 via any suitable delivery mechanism 1262. The delivery mechanism 1262 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 1236. The delivery mechanism may be a signal configured to reliably transfer the computer program 1236. The apparatus 1230 may propagate or transmit the computer program 1236 as a computer data signal.

Computer program instructions for causing an apparatus to perform at least the following or for performing at least the following:
determining that a level of interference of a received signal 134 at a UE 130 is above a threshold;
determining a transmission state of at least one sub-system 136 of the UE 130; and
determining based, at least in part, on the determining that a level of interference of a received signal 134 is above a threshold and the determined transmission state of at least one sub-system 136 whether at least a portion of the interference is caused by a transmitter 138 of the UE 130.

Computer program instructions for causing an apparatus to perform at least the following or for performing at least the following:
transmitting assistance information 156 by a UE 130 towards a network node, the assistance information 156 comprising timing information 148 of interfering received signals 134 at the UE 130 and associated source information 150, wherein the source information 150 indicates whether the source of at least a portion of the interference is caused by a transmitter 138 of the UE 130 or if the interference is caused by a source external to the UE; and
receiving, from the network node, configuration information 154 for scheduling of transmission and/or reception of information by at least one sub-system 136 of the UE 130 to reduce interference by received signals.

Computer program instructions for causing an apparatus to perform at least the following or for performing at least the following:
receiving assistance information 156 from a UE 130, the assistance information 156 comprising timing information 148 of interfering received signals at the UE 130 and associated source information 150, wherein the source information 150 indicates whether the source of at least a portion of the interference is caused by a transmitter of the UE 130 or if the interference is caused by a source external to the UE 130;
determining based, at least in part, on the received assistance information 156 scheduling information 164 for transmission and/or reception of information by at least one sub-system 136 of the UE 130 to reduce interference by received signals 134; and
transmitting, towards the UE 130, configuration information 154 to configure the UE 130 for transmission and/or reception according to the scheduling information 164.

The computer program instructions may be comprised in a computer program, a non-transitory computer readable medium, a computer program product, a machine readable medium. In some but not necessarily all examples, the computer program instructions may be distributed over more than one computer program.

Although the memory 1234 is illustrated as a single component/circuitry it may be implemented as one or more separate components/circuitry some or all of which may be integrated/removable and/or may provide permanent/semi-permanent/ dynamic/cached storage.

In examples the memory 1234 comprises a random-access memory 1258 and a read only memory 1260. In examples the computer program 1236 can be stored in the read only memory 1258. See, for example, Fig. 12B

Although the processor 1232 is illustrated as a single component/circuitry it may be implemented as one or more separate components/circuitry some or all of which may be integrated/removable. The processor 1232 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the accompanying Figs may represent steps in a method and/or sections of code in the computer program 1236. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

Thus, the apparatus 1230 can, in examples, comprise means for:
determining that a level of interference of a received signal 134 at a UE 130 is above a threshold;
determining a transmission state of at least one sub-system 136 of the UE 130; and
determining based, at least in part, on the determining that a level of interference of a received signal 134 is above a threshold and the determined transmission state of at least one sub-system 136 whether at least a portion of the interference is caused by a transmitter 138 of the UE 130.

Thus, the apparatus 1230 can, in examples, comprise means for:
transmitting assistance information 156 by a UE 130 towards a network node, the assistance information 156 comprising timing information 148 of interfering received signals 134 at the UE 130 and associated source information 150, wherein the source information 150 indicates whether the source of at least a portion of the interference is caused by a transmitter 138 of the UE 130 or if the interference is caused by a source external to the UE; and
receiving, from the network node, configuration information 154 for scheduling of transmission and/or reception of information by at least one sub-system 136 of the UE 130 to reduce interference by received signals.

Thus, the apparatus 1230 can, in examples, comprise means for:
receiving assistance information 156 from a UE 130, the assistance information 156 comprising timing information 148 of interfering received signals at the UE 130 and associated source information 150, wherein the source information 150 indicates whether the source of at least a portion of the interference is caused by a transmitter of the UE 130 or if the interference is caused by a source external to the UE 130;
determining based, at least in part, on the received assistance information 156 scheduling information 164 for transmission and/or reception of information by at least one sub-system 136 of the UE 130 to reduce interference by received signals 134; and
transmitting, towards the UE 130, configuration information 154 to configure the UE 130 for transmission and/or reception according to the scheduling information 164.

In examples, an apparatus 1230 can comprise means for performing one or more methods, or at least part of one or more methods, as disclosed herein.

In examples, an apparatus 1230 can be configured to perform one or more methods, or at least a part of one or more methods, as disclosed herein.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or `the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or `the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

Further aspects and example embodiments useful for understanding the invention are given in the following numbered paragraphs:
1. A user equipment comprising means for:
   determining that a level of interference of a received signal at the user equipment is above a threshold;
   determining a transmission state of at least one sub-system of the user equipment; and
   determining based, at least in part, on the determining that a level of interference of a received signal is above a threshold and the determined transmission state of at least one sub-system whether at least a portion of the interference is caused by a transmitter of the user equipment.
2. A user equipment of paragraph 1, wherein determining the transmission state of at least one sub-system of the user equipment comprises receiving an indication that a transmitter of the at least one sub-system of the user equipment is active.
3. A user equipment of paragraph 1 or paragraph 2, wherein the means are configured to determine that the source of at least part of the interference is internal to the user equipment or that the source of the interference is external to the user equipment, wherein the determining is based, at least in part, on the determining that a level of interference of a received signal is above a threshold and the determined transmission state of at least one sub-system.
4. A user equipment of any preceding paragraph, wherein determining whether at least a portion of the interference is caused by a transmitter of the user equipment comprises determining whether at least one transmitter of at least one sub-system of the user equipment is on while the interference is received.
5. A user equipment of any preceding paragraph, wherein determining that a level of interference of a received signal at a user equipment is above a threshold comprises comparing a signal indicative of the power of the received signal and a reference signal level.
6. A user equipment of any preceding paragraph, wherein the means are configured to:
   determine, for a plurality of received signals received over a period of time, whether at least a portion of each of the plurality of received signals is caused by a transmitter of the user equipment; and
   determine timing information for received signals from at least one source that is internal to the user equipment and/or at least one source that is external to the user equipment.
7. A user equipment of paragraph 6, wherein the means are configured to:
   transmit the determined timing information and associated determined information regarding the source of the received signals towards a network node; and
   receive, from the network node, configuration information for scheduling of transmission and/or reception of information by at least one sub-system of the user equipment to reduce interference by received signals.
8. A method comprising:
   determining that a level of interference of a received signal at a user equipment is above a threshold;
   determining a transmission state of at least one sub-system of the user equipment; and
   determining based, at least in part, on the determining that a level of interference of a received signal is above a threshold and the determined transmission state of at least one sub-system whether at least a portion of the interference is caused by a transmitter of the user equipment.
9. A method of paragraph 8, wherein determining the transmission state of at least one sub-system of the user equipment comprises receiving an indication that a transmitter of the at least one sub-system of the user equipment is active.
10. A method of paragraph 8 or paragraph 9, wherein the method comprises determining that the source of at least part of the interference is internal to the user equipment or that the source of the interference is external to the user equipment, wherein the determining is based, at least in part, on the determining that a level of interference of a received signal is above a threshold and the determined transmission state of at least one sub-system.
11. A method of any one of paragraphs 8 to 10, wherein the method comprises:
   determining, for a plurality of received signals received over a period of time, whether at least a portion of each of the plurality of received signals is caused by a transmitter of the user equipment; and
   determining timing information for received signals from at least one source that is internal to the user equipment and/or at least one source that is external to the user equipment.
12. A method of paragraph 11, wherein the method comprises:
   transmitting the determined timing information and associated determined information regarding the source of the received signals towards a network node; and
   receiving, from the network node, configuration information for scheduling of transmission and/or reception of information by at least one sub-system of the user equipment to reduce interference by received signals.
13. A computer program comprising instructions which, when executed by an apparatus, cause the apparatus at least to perform:
   determining that a level of interference of a received signal at a user equipment is above a threshold;
   determining a transmission state of at least one sub-system of the user equipment; and
   determining based, at least in part, on the determining that a level of interference of a received signal is above a threshold and the determined transmission state of at least one sub-system whether at least a portion of the interference is caused by a transmitter of the user equipment.
14. A computer program of paragraph 13, wherein determining the transmission state of at least one sub-system of the user equipment comprises receiving an indication that a transmitter of the at least one sub-system of the user equipment is active.
15. A computer program of paragraph 13 or paragraph 14, wherein the computer program comprises instructions which, when executed by an apparatus, cause the apparatus to perform at least determining that the source of at least part of the interference is internal to the user equipment or that the source of the interference is external to the user equipment, wherein the determining is based, at least in part, on the determining that a level of interference of a received signal is above a threshold and the determined transmission state of at least one sub-system.
16. A computer program of any one of paragraphs 13 to 15, wherein the computer program comprises instructions which, when executed by an apparatus, cause the apparatus to perform at least:
   determining, for a plurality of received signals received over a period of time, whether at least a portion of each of the plurality of received signals is caused by a transmitter of the user equipment; and
   determining timing information for received signals from at least one source that is internal to the user equipment and/or at least one source that is external to the user equipment.
17. A computer program of paragraph 16, wherein the computer program comprises instructions which, when executed by an apparatus, cause the apparatus to perform at least:
   transmitting the determined timing information and associated determined information regarding the source of the received signals towards a network node; and
   receiving, from the network node, configuration information for scheduling of transmission and/or reception of information by at least one sub-system of the user equipment to reduce interference by received signals.
18. An apparatus comprising means for:
   transmitting assistance information by a user equipment towards a network node, the assistance information comprising timing information of interfering received signals at the user equipment and associated source information, wherein the source information indicates whether the source of at least a portion of the interference is caused by a transmitter of the user equipment or if the interference is caused by a source external to the user equipment; and
   receiving, from the network node, configuration information for scheduling of transmission and/or reception of information by at least one sub-system of the user equipment to reduce interference by received signals.
19. An apparatus of paragraph 18, wherein the means are configured to:
   transmit, by the user equipment, towards the network node capability information indicating the capability of the user equipment to determine and report source information of interfering received signals.
20. An apparatus of paragraph 18 or 19, wherein the means are configured to:
   receive, from the network node, configuration information to configure the user equipment to determine and report source information of interfering received signals.
21. A method comprising:
   transmitting assistance information by a user equipment towards a network node, the assistance information comprising timing information of interfering received signals at the user equipment and associated source information, wherein the source information indicates whether the source of at least a portion of the interference is caused by a transmitter of the user equipment or if the interference is caused by a source external to the user equipment; and
   receiving, from the network node, configuration information for scheduling of transmission and/or reception of information by at least one sub-system of the user equipment to reduce interference by received signals.
22. An apparatus comprising means for:
   receiving assistance information from a user equipment, the assistance information comprising timing information of interfering received signals at the user equipment and associated source information, wherein the source information indicates whether the source of at least a portion of the interference is caused by a transmitter of the user equipment or if the interference is caused by a source external to the user equipment;
   determining based, at least in part, on the received assistance information scheduling information for transmission and/or reception of information by at least one sub-system of the user equipment to reduce interference by received signals; and
   transmitting, towards the user equipment, configuration information to configure the user equipment for transmission and/or reception according to the scheduling information.
23. An apparatus of paragraph 22, wherein the means are configured to:
   receive, from the user equipment, capability information indicating the capability of the user equipment to determine and report source information of interfering received signals.
24. An apparatus of paragraph 22 or 23, wherein the means are configured to:
   determine based, at least in part, on the received capability information, configuration information to configure the user equipment to determine and report source information of interfering received signals; and
   transmitting the configuration information towards the user equipment.
25. A method comprising:
   receiving assistance information from a user equipment, the assistance information comprising timing information of interfering received signals at the user equipment and associated source information, wherein the source information indicates whether the source of at least a portion of the interference is caused by a transmitter of the user equipment or if the interference is caused by a source external to the user equipment;
   determining based, at least in part, on the received assistance information scheduling information for transmission and/or reception of information by at least one sub-system of the user equipment to reduce interference by received signals; and
   transmitting, towards the user equipment, configuration information to configure the user equipment for transmission and/or reception according to the scheduling information.

## Claims

1. A user equipment comprising means for:
determining that a level of interference of a received signal at the user equipment is above a threshold;
determining a transmission state of at least one sub-system of the user equipment; and
determining based, at least in part, on the determining that a level of interference of a received signal is above a threshold and the determined transmission state of the at least one sub-system of the user equipment whether at least a portion of the interference is caused by a transmitter of the user equipment.

2. A user equipment as claimed in claim 1, wherein determining the transmission state of at least one sub-system of the user equipment comprises receiving an indication that a transmitter of the at least one sub-system of the user equipment is active.

3. A user equipment as claimed in claim 1 or claim 2, wherein the means are configured to determine that the source of at least part of the interference is internal to the user equipment or that the source of the interference is external to the user equipment, wherein the determining is based, at least in part, on the determining that a level of interference of a received signal is above a threshold and the determined transmission state of at least one sub-system.

4. A user equipment as claimed in any preceding claim, wherein determining whether at least a portion of the interference is caused by a transmitter of the user equipment comprises determining whether at least one transmitter of at least one sub-system of the user equipment is on while the interference is received.

5. A user equipment as claimed in any preceding claim, wherein determining that a level of interference of a received signal at a user equipment is above a threshold comprises comparing a signal indicative of the power of the received signal and a reference signal level.

6. A user equipment as claimed in any preceding claim, wherein the means are configured to:
determine, for a plurality of received signals received over a period of time, whether at least a portion of each of the plurality of received signals is caused by a transmitter of the user equipment; and
determine timing information for received signals from at least one source that is internal to the user equipment and/or at least one source that is external to the user equipment.

7. A user equipment as claimed in claim 6, wherein the means are configured to:
transmit the determined timing information and associated determined information regarding the source of the received signals towards a network node; and
receive, from the network node, configuration information for scheduling of transmission and/or reception of information by at least one sub-system of the user equipment to reduce interference by received signals.

8. A method comprising:
determining, by a user equipment, that a level of interference of a received signal at the user equipment is above a threshold;
determining, by the user equipment, a transmission state of at least one sub-system of the user equipment; and
determining, by the user equipment, based, at least in part, on the determining that a level of interference of a received signal is above a threshold and the determined transmission state of the at least one sub-system of the user equipment whether at least a portion of the interference is caused by a transmitter of the user equipment.

9. A method as claimed in claim 8, wherein determining the transmission state of at least one sub-system of the user equipment comprises receiving an indication that a transmitter of the at least one sub-system of the user equipment is active.

10. A method as claimed in claim 8 or claim 9, wherein the method comprises determining that the source of at least part of the interference is internal to the user equipment or that the source of the interference is external to the user equipment, wherein the determining is based, at least in part, on the determining that a level of interference of a received signal is above a threshold and the determined transmission state of at least one sub-system.

11. A method as claimed in any of claims 8 to 10, wherein the method comprises:
determining, for a plurality of received signals received over a period of time, whether at least a portion of each of the plurality of received signals is caused by a transmitter of the user equipment; and
determining timing information for received signals from at least one source that is internal to the user equipment and/or at least one source that is external to the user equipment.

12. A method as claimed in claim 11, wherein the method comprises:
transmitting the determined timing information and associated determined information regarding the source of the received signals towards a network node; and
receiving, from the network node, configuration information for scheduling of transmission and/or reception of information by at least one sub-system of the user equipment to reduce interference by received signals.

13. A computer program comprising instructions which, when executed by an apparatus, cause the apparatus at least to perform:
determining that a level of interference of a received signal at a user equipment is above a threshold;
determining a transmission state of at least one sub-system of the user equipment; and
determining based, at least in part, on the determining that a level of interference of a received signal is above a threshold and the determined transmission state of the at least one sub-system of the user equipment whether at least a portion of the interference is caused by a transmitter of the user equipment.

14. A computer program as claimed in claim 13, wherein determining the transmission state of at least one sub-system of the user equipment comprises receiving an indication that a transmitter of the at least one sub-system of the user equipment is active.

15. A computer program as claimed in claim 13 or claim 14, wherein the computer program comprises instructions which, when executed by an apparatus, cause the apparatus to perform at least determining that the source of at least part of the interference is internal to the user equipment or that the source of the interference is external to the user equipment, wherein the determining is based, at least in part, on the determining that a level of interference of a received signal is above a threshold and the determined transmission state of at least one sub-system.
